## Europäisches Patentamt
## European Patent Office
## Office européen des brevets

(19)

(11) Veröffentlichungsnummer: **0 189 368**
**B1**

(12) **EUROPÄISCHE PATENTSCHRIFT**

(45) Veröffentlichungstag der Patentschrift: 04.04.90

(51) Int. Cl.⁵: **C 21 B 13/14, C 21 B 11/00**

(21) Anmeldenummer: **86730002.2**

(22) Anmeldetag: **07.01.86**

(54) **Verfahren zur Herstellung von Roheisen.**

(30) Priorität: **21.01.85 DE 3502306**

(43) Veröffentlichungstag der Anmeldung:
**30.07.86 Patentblatt 86/31**

(45) Bekanntmachung des Hinweises auf die
Patenterteilung:
**04.04.90 Patentblatt 90/14**

(84) Benannte Vertragsstaaten:
**AT DE GB IT LU SE**

(56) Entgegenhaltungen:
EP-A-0 037 809    FR-A-1 343 115
DE-A-1 458 759    GB-A- 827 957
DE-A-2 133 860    US-A-2 865 733
DE-A-2 629 743    US-A-2 989 297
FR-A- 590 612    US-A-3 002 736
FR-A- 747 868    US-A-3 607 224
FR-A-1 281 005
SOVIET INVENTIONS ILLUSTRATED, Week K01,
veröffentlicht 6. Februar 1983: 16-06-1980 - SU -
942 927 (28-02-1982)MOSC. POWER INST.r *SU
909 521
Chem. Ing. Technik 54(1982) Nr. 5, p. 522/523

(73) Patentinhaber: **DEUTSCHE VOEST-ALPINE
INDUSTRIEANLAGENBAU GMBH**
**Neusser Strasse 111**
**D-4000 Düsseldorf 1 (DE)**

(72) Erfinder: **Papst, Gero, Dr. Ing.**
**Hasselstrasse 8**
**D-4044 Kaarst 2 (DE)**
Erfinder: **Hauk, Rolf, Dr. Ing.**
**Ratskellerstrasse 12**
**D-7590 Achern (DE)**

(74) Vertreter: **Pfenning, Meinig & Partner**
**Mozartstrasse 17**
**D-8000 München 2 (DE)**

**Beschreibung**

Die Erfindung betrifft eine Verfahren zur Herstellung von Roheisen aus Feinerz gemäß Anspruch 1.

Aus der GB—A—827 957 ist ein ähnliches Verfahren bereits bekannt. Hier wird Erz eingesetzt und der erforderlicht Kohlenstoffträger axial zugegeben. Es handelt sich speziell um pulverförmige Kohle und pulverförmiges Eisenerz, die gemeinsam der Verbrennungskammer zugeführt werden, wobei zusätzlich Luft so eingeführt wird, daß sich das Gemisch in einer kreisenden Bewegung abwärts bewegt.

Unter einem "Schmelzreduktionsverfahren" auf das es bei der vorliegenden Erfindung ankommt, werden solche Verfahren verstanden, bei denen Erze oder vorreduzierte Erze zu einem wesentlichen Anteil im flussigen Zustand zu flüssigem Eisen oder Eisenlegierungen reduziert werden. Die gegebenenfalls durchgeführte Vorreduktion erfolgt im festen Zustand des Erzes.

Bei einem bekannten derartigen Verfahren, dem sogenannten Elred-Verfahren wird feinkörniges Eisenerzkonzentrat zunächst in einer zirkulierenden Wirbelschicht vorreduziert. In den Wirbelschichtreaktor werden Kohlestaub und Eisenerzstaub eingeblasen. Die Wirbelschicht wird mit Heißluft und von $CO_2$ befreitem Krieslaufgas aufrechterhalten. Das vorreduzierte Erz mit einem Metallisierungsgrad von 70% wird aus dem Reaktor ausgetragen und zum Einschmelzen und zur Endreduktion in einen Gleichstrom-Lichtbogenofen transportiert. Der Lichtbogenofen hat eine zentrische Elektrode aus Kohlenstoff; die Gegenelektrode wird durch das Eisenbad gebildet. Durch eine vertikale Bohrung in der Kohlenstoffelektrode werden das vorreduzierte Erz und Kalk eingebracht. In dem Plasma unter der Elektrode finden Einschmelzen, Endreduktion und Aufkohlen des Roheisens statt. Die Abgase beider Verfahrensstufen werden in einer kombinierten Gas-Dampfkraftanlage in elektrische Energie umgewandelt, die den gesamten Verbrauch der Anlage deckt und gegebenenfalls sogar als Überschußenergie in das Versorgungsnetz eingespeist werden kann. Die Schmelzreduktionsstufe benötigt jedoch relativ viel elektrische Energie, so daß der Energieverbrauch sehr hoch ist. Auch ist diese Anlage apparativ sehr aufwendig.

Bei einem unter der Bezeichnung "Inred-Verfahren" bekannten Verfahren werden zunächst Feinerz, Feinkohle und Sauerstoff in eine Schmelzkammer eingeblasen und in dieser bei ca. 1900°C zur Reakation gebracht. Dabei wird das Erz aufgeschmolzen und zu FeO reduziert. Die Kohle wird hierbei teilweise verbrannt und teilweise verkokt. Im einem unterhalb der Schmelzkammer angeordneten Elektrolichtbogenofen finden die Endreduktion und die Schlackenbildung sowie das Aufkohlen statt. Vor- und Endreduktion erfolgen somit in einem gemeinsamen Reaktorgefaß. Auch hier ist die Abhitzeverwentung gekoppelt mit einer elektrizitätserzeugung, so daß dieses Verfahren keinen anderen Energieträger als Kohle benötigt. Jedoch ist auch hier der Kohgleverbrauch sehr groß. Ein weiterer Nachteil ist der Elektrodenverbrauch des Lichtbogenofens und schließlich ist durch die Anlage zur Erzeugung der elektrischen Energie der apparative Aufwand sehr hoch.

Das songenannte Plasmamelt-Verfahren vereinigt eine Vorreduktionsstufe in der Wirbelschicht und eine Endreduktions- und Schmelzstufe unter Verwendung eines Gasplasmas. In der Vorreduktionsstufe wird Feinerz in zwei hintereinandergeschalteten Wirbelschichtreaktoren bis zu einem Metallisationsgrad von 50 bis 70% reduziert. Das gereinigte Abgas der Endreduktionsstufe dient dabei als Reduktionsmittel. Das vorreduzierte Feinerz wird mit Schlackebildnern, Kohlenstaub und Kreislaufgas in einen Plasma brenner geblasen, der in die Schmelzreduktionszone eines mit Koks gefüllten Schachtofens hineinragt. Der Plasmabrenner liefert die Hochtemperatur-Wärmeenergie zum Aufschmelzen und zur Endreduktion des Feinerzes. Dieses Verfahren ist durch einen sehr hohen Verbrauch an elektrischer Energie gekennzeichnet, so daß es insbesondere aus ökonomischen Gründen unvorteilhaft ist.

Aus der DE—A—2 133 860 ist es ganz allgemein bekannt eine in einem Fluidbett vorreduziertes Eisen anschliessend im Zyklonofen unter Zufuhr von CO und $H_2$ zu Schwammeisen fertig zu reduzieren, wibei dieses im Unterteil des Zyklons mittels Lichtbogen aufgeschmolzen wird.

Auch ist noch ein Verfahren bekannt nach dem Feinerz axial und Reduktionsgas tangential zugeführt werden und hierdurch im Zyklon eine kriesende Bewegung ermöglicht wird (FR—A—590 612).

Ebenso zeigt die DE—2 629 743 ein Verfahren, bei dem in einem Zyklonofen über schräggestellte Düsen in das Ofenzentrum eingegeben wird und die $O_2$— Zuführung tangential erfolgt.

Von diesem Stand der Technik ausgehend, liegt der vorliegenden Erfindung die Aufgabe zugrunde, ein Verfahren der vorbeschriebenen Art so auszugestalten, daß es bei relativ niedrigem Energieverbrauch mit einem Vereinfachten Verfahrensblauf auskommt.

Diese Aufgabe wird erfindungsgemäß gelöst, durch ein Verfahren zur Herstellung von roheisen aus Feinerz, bei dem das Feinerz zunächst vorreduziert und der so erhaltene Eisenschwamm eingeschmolzen und in diesem Zustand einer Endreduktion unterzogen wird, wobei neben dem Eisenschwamm ein Kohlenstoffträger, ein Sauerstoffhaltiges Gas und gegebenenfalls Zuschlagstoffe zugeführt werden, mit der Maßgabe daß der Schmelzzyklon und die Endreduktion in einem Schmelzzyklon durchgeführt werden, in den der vorreduzierte Eisenschwamm über eine zentrale Öffnung (1) im Deckenbereich axial eingebracht und das sauerstoffhaltige Gas und der Kohlenstoffträger durch eine Öffnung (3) in der Seite des Deckenbereichs tangential eingeblasen werden, wobei der Drall im Schmelzzyklon durch entsprechende Verstellung der Eintrittsöffnung für das Sauerstoffhaltige Gas eingestellt, und daß dem Schmelzzyklon stückiger Koks zugeführt wird zur Bildung einer metallurgische Arbeit leistenden Koksschicht auf der Schlackenschicht.

Hierbei wird vorzugsweise das beim Schmelzvorgang und bei der Endreduktion erzeugte Abgas zur Vorreduktion des Feinerzes verwendet. Die Zuschlag stoffe können ebenfalls tangential in den Schmelzzyklon eingeblasen werden. Der Eisenschwamm kann über eine gasdichte Zellradschleuse oder pheumatisch in den Schmelzzyklon eingebracht werden. Durch die Zugabe einer Koksschicht mit einer Höhe im Bereich von 20 bis 100 cm werden Ungleichmäßigkeiten im FeO-Gehalt ausgeglichen, da sonst bei Schwankungen des FeO-Gehalts die Schlacke eine gleichbleibende Roheisenqualität insbesondere hinsichtlich des Schwefelgehalts nicht gewährleisten würde.

Bei Einsatz von minderweitiger Kohle, das heißt solcher mit hohen Gehalten an Asche und flüchtigen Bestandteilen, kann es notwenig werden, die Temperatur im System zu erhöhen, beispeilsweise durch Nachverbrennung. Hierzu kann in den unteren erweiterten Teil des Schmelzzyklons Sauerstoff direkt oder erhitzter Sauerstoff oder zurückgeführtes Prozeßgas über einen Plasmabrenner eingeblasen werden. Auch das tangential eingeblasene sauerstoffhaltige Gas kann durch einen Plasmabrenner oder rekuperativ vorgewärmt werden. Hierzu wird vorzugsweise $CO_2$-haltiges Abgas aus der Vorreduktionsstufe dem (den) Plasmabrenner(n) zugeführt. Weiterhin kann der Schmelzzyklon induktiv beheizt werden.

Aus Chem.-Ing.-Tech. 54 (1982) Nr. 5, S. 522/523, ist bereits die Verwendung von Schmelzzyklonen zur Gewinnung von Nichteisenmetallen oder deren Verbindungen bekannt. Hierbei werden feinkörnige Mischerze im Drehströmungsfeld auf hohe Temperturen gebracht, wibei die zu gewinnenden Nichteisen-Komponenten entweder verdampfen bzw. sublimieren oder aber in Schmelzfluß überführt und in einem nachfolgenden Absetzbecken von der Gangart getrennt werden. Die Verwendung des Schmelzzyklons bietet die folgenden Vorteile: Hoher Wärme- und Stoffaustausch, Stabilisierung der Reaktion durch Rückströmungsgebiete sowie optimale Anpassungsmöglichkeit des Dralles auf die Körnung des Feinerzes.

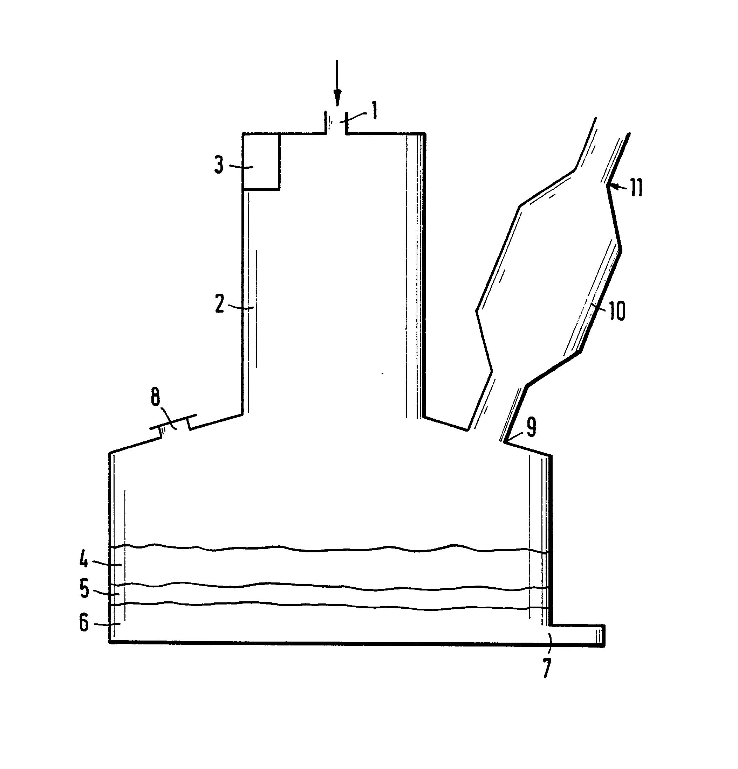

Die Erfindung wird im folgenden anhand eines in der Figur dargestellten Ausführungsbeispieles näher erläutert. Diese zeigt in der schematischer Darstellung einen Schmelzzyklon.

Über eine zentrale Öffnung im Deckenbereich wird dem Schmelzzyklon 2 vorreduzierter Eisenschwamm beispielsweise über eine Zellradschleuse oder pneumatisch zugeführt. Die Vorreduktion des Eisenerzes erfolgt vorzugsweise mehrstufig, wobei sie in Wirbelschichten, in Reduktionszyklonen oder in einem Flugstaubreaktor durchgeführt werden kann. Als Reduktionsgas wird hierfür das Abgas des Schmelzzyklons 2 nach entsprechender Abkühlung verwendet. Über eine Öffnung 3 an der Seite des Deckenbereichs werden Feinkohle und Zuschlagstoffe zusammen mit einem sauerstoffhaltigen Gas, vorzugsweise reinem Sauerstoff, tangential in den Schemlzzyklon 2 eingeblasen. Durch den hierdurch entstehenden Drall werden die feinen Eisenschwammpartikel sehr rasch zur Außenwand hin abgelenkt und daßei werden sie durch das entstandene heiße Vergasungsgas fertigreduziert und geschmolzen. Das geschmolzene Eisen passiert anschließend eine Koksschicht 4 sowie eine Schlackeschicht 5 und bildet ein Eisenbad 6 am Boden des Schmelzzyklons 2. Das Roheisen und die flüssige Schlacke werden diskontinuierlich durch eine Abstichloch 7 abgestocken. Die Koksschicht 4 hat, wie erwähnt, den Zweck, Ungleichmäßigkeiten im FeO-Gehalt auszugleichen.

In der Decke des Sammelraumes im verbreiterten unteren Bereich des Schmelzzyklons 2 befinden sich Öffnungen 8 für den Einsatz zusätzlicher Sauerstoff- oder Plasmabrenner. Mit Hilfe dieser Brenner kann die Temperatur im unteren Berich des Schmelzzyklons 2 erhöht werden, wenn diese allein durch die Verbrennung der durch die Öffnung 3 eingebrachten Feinkohle nicht ausreichend ist. Zum Beheizen der Plasmabrenner kann das Abgas der Vorreduktionsstufe verwendet werden. Auch der über die Öffnung 3 eingeblasene Sauerstoff kann vorgewärmt werden. Schließlich besteht noch die Möglichkeit, den Schmelzzyklon zusätzlich induktiv zu beheizen.

Das im Einschmelzvergaser 2 erzeugte Gas eignet sich als Reduktionsgas für die Vorreduktion des Feinerzes. Hierzu muß es jedoch von etwa 1500°C auf ca. 800°C abgekühlt werden. Daher gelangt es von einem Gasaustritt 9 zunächst in ein Abhitzesystem 10, in dem es auf eta 900°C abgekühlt wird. Anschließend wird ihm über eine Leitung 11 ein Kühlgas zugemischt, so daß es auf die geeignete Reduktionstemparatur eingestellt werden kann. Als Kühlgas kann vorzugsweise Prozeßgas aus der Vorreduktionsstufe verwendet werden, welches man vorzugsweise vorher einer $CO_2$-Wäsche unterzogen hat.

Der Drall der über die Öffnung 3 tangential eingeführten Stoffe kann zur Einstellung optimaler Prozeßbedingungen auf einfache Weise verändert werden, beispielsweise durch entsprechende Verstellung der Öffnung 3.

**Patentansprüche**

1. Verfahren zur Herstellung von Roheisen aus Feinerz, bei dem das Feinerz zunächst vorreduziert und der so erhaltene Eisenschwamm eingeschmolzen und in diesem Zustand einer Endreduktion unterzogen wird, wobei neben dem Eisenschwamm ein Kohlenstoffträger, ein sauerstoffhaltiges Gas und gegebenenfalls Zuschlagstoffe zugeführt werden, mit der Maßgabe daß der Schmelzvorgang und ide Endreduktion in einem Schmelzzyklon durchgeführt werden, in den der vorreduzierte Eisenschwamm über eine zentrale Öffnung (1) im Deckenbereich axial eingebracht und das sauerstoffhaltige Gas und der Kohlenstoffträger durch eine Öffnung (3) in der Seite des Deckenbereichs tangential eingeblasen werden, wobei der Drall im Schmelzzyklon durch entsprechende Verstellung der Eintrittsöffnung für das sauerstoffhaltige Gas eingestellt, und daß dem Schmelzzyklon stückiger Koks zugeführt wird zur Bildung einer metallurgische Arbeit leistenden Koksschicht auf der Schlackenschicht.

2. Verfahren nach Anspruch 1, dadurch gekennzeichnet, daß das beim Schmelzvorgang und bei der Endreduktion erzeugte Abgas zur Vorreduktion des Feinerzes verwendet wird.

3. Verfahren nach Anspruch 1 oder 2, dadurch gekennzeichnet, daß die Zuschlagstoffe ebenfalls tangential in den Schmelzzyklon eingeblasen werden.

4. Verfahren nach einem der Ansprüche 1 bis 3, dadurch gekennzeichnet, daß als sauerstoffhaltiges Gas reiner Sauerstoff verwendet wird.

5. Verfahren nach einem der Ansprüche 1 bis 4, dadurch gekennzeichnet, daß das Feinerz mehrstufig bis zu einer Metallisation von 50 bis 85%, bevorzugt 65 bis 75%, vorreduziert wird.

6. Verfahren nach einem der Ansprüche 1 bis 5, dadurch gekennzeichnet, daß der Eisenschwamm über eine gasdichte Zellradschleuse in den Schmelzzyklon eingebracht wird.

7. Verfahren nach einem der Ansprüche 1 bis 5, dadurch gekennzeichnet, daß der Eisenschwamm pneumatisch in den Schmelzzyklon eingebracht wird.

8. Verfahren nach Anspruch 1, dadurch gekennzeichnet, daß die Koksschicht eine Höhe im Bereich von 20 bis 100 cm besitzt.

9. Verfahren nach einem der Ansprüche 1 bis 8, dadurch gekennzeichnet, daß in den unteren erweiterten Teil des Schmelzzyklons zur Temperaturerhöhung Sauerstoff eingeblasen wird.

10. Verfahren nach einem der Ansprüche 1 bis 9, dadurch gekennzeichnet, daß im unteren Teil des Schmelzzyklons erhitzter Sauerstoff oder zurückgeführtes Prozeßgas über einen Plasmabrenner eingeblasen wird.

11. Verfahren nach einem der Ansprüche 1 bis 10, dadurch gekennzeichnet, daß das tangential eingeblasene sauerstoffhaltige Gas durch einen Plasmabrenner oder rekuperativ vorgewärmt wird.

12. Verfahren nach einem der Ansprüche 1 bis 11, dadurch gekennzeichnet, daß zur Kühlung des Abgases aus dem Schmelzzyklon Prozeßgas aus der Vorreduktionsstufe verwendet wird, welches vorzugsweise vorher einer $CO_2$-Wäsche unterworfen wurde.

13. Verfahren nach einem der Ansprüche 1 bis 12, dadurch gekennzeichnet, daß die Vorreduktion in einer oder mehreren Wirbelschichten durchgeführt wird.

14. Verfahren nach einem der Ansprüche 1 bis 12, dadurch gekennzeichnet, daß die Vorreduktion in Reduktionszyklonen durchgeführt wird.

15. Verfahren nach einem der Ansprüche 1 bis 12, dadurch gekennzeichnet, daß die Vorreduktion im Flugstaubreaktor durchgeführt wird.

16. Verfahren nach Anspruch 10 oder 11, dadurch gekennzeichnet, daß $CO_2$-haltiges Abgas aus der Vorreduktionsstufe dem (den) Plasmabrenner(n) zugeführt wird.

17. Verfahren nach einem der Ansprüche 1 bis 16, dadurch gekennzeichnet, daß der Schmelzzyklon induktiv beheizt wird.

**Revendications**

1. Procédé de préparation de fonte brute à partir de fines de minerai, procédé au cours duquel on réduit d'arbord préalablement les fines de minerai, on met en fusion l'éponge de fer ainsi obtenue et on la soumet dans cet état à une réduktion finale, tandis qu'en plus de l'éponge der fer, on achemine un vecteur de carbone, un gaz contenant de l'oxygène et éventuellement des fondants, dans la mesure où l'on procédé à la fusion et à la réduction finale dans un cyclone de fusion, dans lequel on introduit axialement l'éponge de fer réduite au préalable, vie une ouverture centrale (1) pratiquée dans la zone du plafond, tandis que l'on insuffle tangentiellement le gaz contenant de l'oxygène et le vecteur de carbone vie une ouverture (3) pratiquée sur le côté de la zone de plafond, le moment cinétique régnant dans le cyclone de fusion étant réglé par un réglage correspondant de l'ouverture d'admission destinée au gaz contenant de l'oxygène, et dans la mesure où l'on achemine du coke en morceaux au cyclone de fusion en vue de constituer une couche de coke effectuant un travail métallurgique sur les scories.

2. Procédé selon la revendication 1, caractérisé en ce que, pour la réduction préalable des fines de minerai, ou utilise des gaz d'échappement générés lors de la fusion et lors de la réduction finale.

3. Procédé selon la revendication 1 ou 2 caractérisé en ce que l'on insuffle les fondants également tangentiellement dans le cyclone de fusion.

4. Procédé selon l'une quelconque des revendications 1 à 3, caractérisé en ce que, comme gaz contenant de l'oxygène, on utilise de l'oxygène pur.

5. Procédé selon l'une quelconque des revendications 1 à 4, caractérisé en ce que l'on réduit préalablement les fines de minerai en plusieurs étapes nour obtenir une teneur en métal de 50 à 85%, de préférence, de 65 à 75%.

6. Procédé selon l'une quelconque des revendications 1 à 5, caractérisé en ce que l'on introduit l'éponge de fer dans le cyclone de fusion, à travers un sas à roue alvéolée étanche aux gaz.

7. Procédé selon l'une quelconque des revendications 1 à 5, caractérisé en ce que l'on introduit pneumatiquement l'éponge de fer dans le cyclone de fusion.

8. Procédé selon la revendication 1, caractérisé en ce que la hauteur atteinte par la couche de coke est comprise dans l'intervalle allant de 20 à 100 cm.

9. Procédé selon l'une quelconque des revendications 1 à 8, caractérisé en ce que, dans la partie inférieur élargie du cyclone de fusion, on insuffle de l'oxygène en vue d'élever la température.

10. Procédé selon l'une quelconque des revendications 1 à 9 caractérisé en ce que, dans la partie inférieure du cyclone de fusion, on insuffle de l'oxygène chauffé ou du gaz de traitement remis en circulation, à l'intervention d'une touche à plasma.

11. Procédé selon l'une quelconque des revendications 1 à 10, caractérisé en ce que l'on chauffe préalablement le gaz contenant de l'oxygène et insufflé tangentiellement, à l'intervention d'une torche à plasma ou par un procédé de récupération.

12. Procédé selon l'une quelconque des revendications 1 à 11, caractérisé en ce que, pour refroidir les gaz d'échappement provenant du cyclone de fusion, on utilise du gaz de traitement issu de l'étape de réduction préalable, ce gaz étant, de préférence, soumis au préalable à un lavage de $CO_2$.

13. Procédé selon l'une quelconque des revendications 1 à 12, caractérisé en ce que l'on procède à la réduction préalable dans un ou plusieurs lits fluidisés.

14. Procédé selon l'une quelconque des revendications 1 à 12, caractérisé en ce que l'on procéde à la réduction préalable dans des cyclones de réduction.

15. Procédé selon l'une quelconque des revendications 1 à 12, caractérisé en ce que l'on procéde à la réduction préalable dans un réacteur à poussières volantes.

16. Procédé selon la 10 ou 11, caractérisé en ce que l'on achemine à la torche (aux torches) à plasma les gaz d'échappement contenant du $CO_2$ et provenant de l'étape de réduction préalable.

17. Procédé selon l'une quelconque des revendications 1 à 16, caractérisé en ce que le cyclone de fusion est chauffé par induction.

**Claims**

1. Method for the production of pig iron from fine ore wherein the fine ore is initially pre-reduced, the thus obtained sponge iron is molten, and in this state an end-reduction is undertaken whereby, apart from the sponge iron, a carbon filler, an oxygenated gas and, if required, aggregates are supplied subject to the melting process and the end-reduction taking place within a melting cycle wherein the pre-reduced sponge iron is supplied axially through a central opening (1) in the top region, and the oxygenated gas and the carbon filler are blown in tangentially through an opening (3) at the side of the top region, whereby the swirl in the melting cycle is set by relative adjustment of the entry opening for the oxygenated gas and by solid coke being supplied to the melting cycle to form a coke bed on top of the slag bed for the execution of metallurgic work.

2. Method according to claim 1, characterised in that the waste gases of the melting process and the end-reduction are used for the pre-reduction of the fine ore.

3. Method according to claim 1 or 2, characterised in that the aggregates are also tangentially blown into the melting cycle.

4. Method according to one of the claims 1 to 3, characterised in that pure oxygen is used as the oxygenated gas.

5. Method according to one of the claims 1 to 4, characterised in that the fine ore is pre-reduced in several stages up to a metallisation of 50 to 85%, preferably 65 to 75%.

6. Method according to one of the claims 1 to 5, characterised in that the sponge iron is supplied into the melting cycle through a gas-tight bucket-wheel-type lock.

7. Method according to one of the claims 1 to 5, characterised in that the sponge foam is pneumatically supplied into the melting cycle.

8. Method according to claim 1, characterised in that the coke bed has a height in the region of 20 to 100 cm.

9. Method according to one of the claims 1 to 8, characterised in that oxygen is blown into the lower, extended section of the melting cycle in order to increase the temperature.

10. Method according to one of the claims 1 to 9, characterised in that heated oxygen or returned process gases are blown into the lower section of the melting cycle by way of a plasma torch.

11. Method according to one of the claims 1 to 10, characterised in that the tangentially blown-in oxygenated gas is pre-heated by a plasma torch or recuperatively.

12. Method according to one of the claims 1 to 11, characterised in that waste gases from the melting cycle are cooled by process gases from the pre-reduction stage which gas is preferred to be previously subjected to $CO_2$ cleansing.

13. Method according to one of the claims 1 to 12, characterised in that the pre-reduction takes place in one or several swirl beds.

14. Method according to one of the claims 1 to 12, characterised in that the pre-reduction is executed in reduction cycles.

15. Method according to one of the claims 1 to 12, characterised in that the pre-reduction is executed in the airborne-dust reactor.

16. Method according to claim 10 or 11, characterised in that the $CO_2$-containing waste gases of the pre-reduction stage is fed to the plasma torch(es).

17. Method according to one of the claims 1 to 16, characterised in that the melting cycle is inductively heated.